# EUROPÄISCHE PATENTSCHRIFT

(11) **EP 2 187 194 B1**
(45) Veröffentlichungstag und Bekanntmachung des Hinweises auf die Patenterteilung: **12.09.2012**
(21) Anmeldenummer: 09014105.2
(22) Anmeldetag: 11.11.2009
(51) Int. Cl.: G01N 1/12, G01N 33/20, C21C 7/00, C22C 38/60, C21C 5/46

(54) **Vorrichtung zur Probenentnahme von Metallschmelzen**
Device for taking a sample from metal melts
Dispositif de prélèvement d'échantillons de bains de fusion métalliques

(30) Priorität: 17.11.2008 DE 102008057797
(43) Veröffentlichungstag der Anmeldung: 19.05.2010
(73) Patentinhaber: Heraeus Electro-Nite International N.V., 3530 Houthalen (BE)
(72) Erfinder: Knevels, Johan, 3960 Bree (BE)
(74) Vertreter: Kühn, Hans-Christian

(56) Entgegenhaltungen:
- EP-B1- 0 436 063
- DE-A1- 2 646 539
- DE-A1- 19 916 234
- FR-A5- 2 171 627
- GB-A- 883 833
- GB-A- 981 357
- US-A- 5 948 350

## Beschreibung

Die Erfindung betrifft eine Vorrichtung zur Probennahme von Metallschmelzen, insbesondere Eisen- und Gußeisenschmelzen, mit einer Probenkammer, die eine Einlauföffnung aufweist, wobei in der Probenkammer Tellur angeordnet ist.

Aus DE 2646539 A1 ist ein Gefäß zur Ermittlung der Erstarrungstemperatur von Metallschmelzen bekannt, in dem eine Schicht gebundenes Tellur an dem Gefäßboden angeordnet ist. Diese Mischung mit einem Feuerfestmaterial und einem wasaerstofferzeugenden Material soll eine verzögerte Freisetzung des Tellur bewirken. Das Tellur selbst soll dann die sogenannte Weißerstarrung der in das Gefäß hineingegossenen Schmelze verbessern. Aus EP 436063 B1 ist es bekannt, eine Mischung mit Tellur in der Verschlusskappe der Einlauföffnung eines Probennehmers für Metallschmelzen anzuordnen. Diese Mischung wird bei Zerstörung der Verschlusskappe mit der einlaufenden Metallschmelze in die Probenkammer gespült. Eine ähnliche Vorrichtung ist in US 5948350 offenbart.

Aus GB 981357 A ist die Anordnung von losem, pulverförmigen Tellurium auf dem Boden eines Schmelztiegels zur Stahlproduktion bekannt. Beim Eintritt der Schmelze in den Tiegel mischt sich das Telluriumpulver homogen mit der Metallschmelze und trägt zu einer besseren Bearbeitbarkeit des Stahles bei. Ein ähliches Verfahren wird in GB 883833 für Gusseisenschmelzen beschrieben. Aus FR 2171627 A5 ist ein Probennehmer für Metallschmelzen bekannt, in dem pulverförmiges Tellurium in einer Umhüllung aus Aluminiumfolie eingepackt und zwischen zwei Verschlusskappen der Einlauföffnung angeordnet ist. Während einer Probennahme wird der Verschluss zerstört, und die eindringende Gusseisenschmelze befördert den schmelzenden Aluminiumwickel in die Probenkammer. Das Telluriumpulver mischt sich dadurch homogen mit der Schmelze, was zur gewünschten Weißerstarrung führt.

Der Erfindung liegt die Aufgabe zugrunde, Probennahmevorrichtungen zur Verfügung zu stellen, in denen Metallproben mit optimaler Weißerstarrung erhältlich sind.

Die Aufgabe wird durch die Merkmale des unabhängigen Anspruchs gelöst. Vorteilhafte Ausgestaltungen sind in den Unteransprüchen angegeben, Überraschend hat sich gezeigt, dass entgegen der Lehre des Standes der Technik die besten Ergebnisse erhalten werden, wenn reines Tellur in der Probe homogen verteilt ist.

Dies wird mit den erfindungsgemäßen Vorrichtungen dadurch erzielt, dass die Probenkammer 0,01 bis 0,05 g/cm³ Tellur, bezogen auf das Volumen der Probenkammer, enthält und dass das Tellur pulverförmig ausgebildet ist mit einer durchschnittlichen Teilchengröße von höchstens 150 µm, bzw. dadurch, dass das Tellur pulverförmig ausgebildet ist mit einer durchschnittlichen Teilchengröße von höchstens 150 µm und einer spezifischen Oberfläche von 0,03 bis 0,1 m²/g.

Vorzugsweise enthält die Probenkammer 0,015 bis 0,025 g/cm³ Tellur, Zweckmäßig ist es weiterhin, dass die spezifische Oberfläche 0,06 bis 0,07 m²/g beträgt.

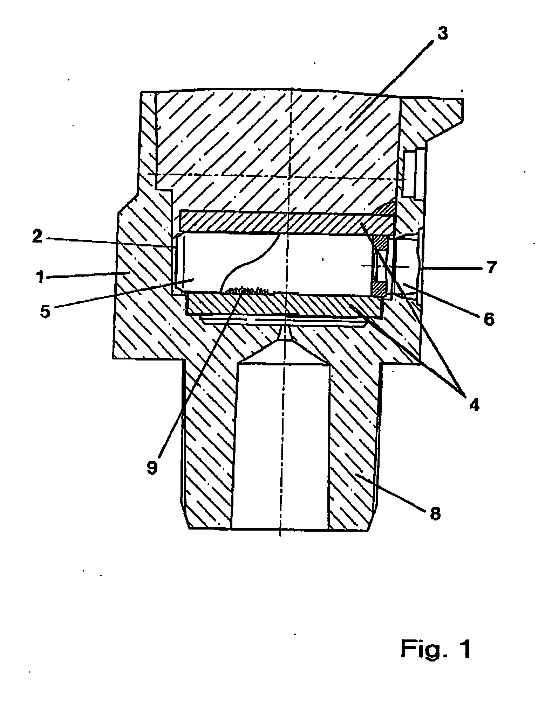

Nachfolgend wird die Erfindung beispielhaft anhand einer Zeichnung erläutert, In der Zeichnung zeigt
- Fig. 1: einen Querschnitt durch einen erfindungsgemäßen Probennehmer,
- Fig. 2: ein Schliffbild einer weißerstarrten Probe und
- Fig. 3: ein Schliffbild einer herkömmlichen Probe, ohne Tellurzusatz.

Ein erfindungsgemäßer Probennehmer weist einen Körper 1 aus Gießereisand auf, in dem eine Probenkammer 2 in einer Öffnung angeordnet ist. Die Öffnung ist auf der Eintauchseite des Probennehmers mit einem Sandkörper 3 verschlossen. Die Probenkammer 2 weist einen kreisförmigen Grundriss mit einem Durchmesser von etwa 35 mm und eine Höhe von etwa 10 mm auf. Die Grundflächen sind jeweils aus Metallplatten 4 gebildet, die dazwischenliegende Mantelfläche besteht aus einem Keramikring 5.
Auf der rechten Seite der Figur ist die Einlauföffnung 6 dargestellt, die durch ein Quarzrohr begrenzt ist. Das Quarzrohr ist mit einer Schutzkappe 7 verschlossen.
Der Körper 1 weist einen Anschlußstutzen 8 für ein übliches Trägerrohr auf. Das Trägerrohr kann aus Pappe gebildet sein.

In der Probenkammer 2 sind etwa 0,2 g Tellur-Pulver 9 angeordnet, das entspricht etwa 0,02 g/cm³, bezogen auf das Kammervolumen, Das Pulver wurde durch Mahlen hergestellt und weist eine mittlere Korngröße von weniger als 100 µm und eine spezifische Oberfläche von etwa 0,065 m²/g auf. Die mittlere Korngröße wurde bestimmt durch Loser-Beugung mit einem Sympateo Teilchenenalysator der Sympatec GmbH, Die spezifische Oberfläche wurde bestimmt durch Gasabsorptions-Laboranalyse unter Verwendung des B.E.T.-Verfahrens.

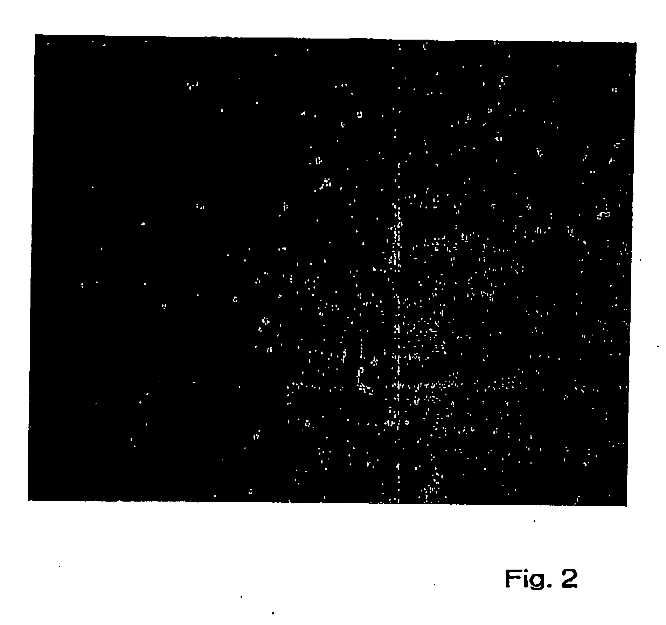

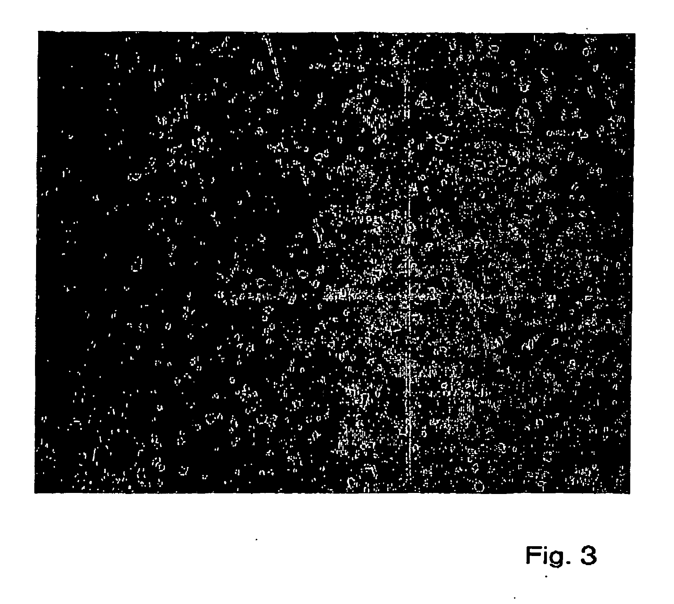

Da spezifische Oberfläche und Volumen bzw. Masse nicht unmittelbar miteinander in Beziehung stehen, führt auch schon die Erfüllung einer der Bedingungen zu den erfindungsgemäßen Vorteilen, die offensichtlich dadurch bewirkt werden, dass sich das Pulver beim Eintritt der Schmelze in die Probenkammer überraschenderweise homogen mit der Metallschmelze mischt. Dies führt zu der erwünschten Weißerstarrung, die in Fig. 2 gezeigt ist. Im Gegensatz dazu entsteht ohne Tellur die in Fig. 3 dargestellte inhomogene Erstarrung.

## Patentansprüche

1. Vorrichtung zur Probennahme von Metallschmelzen, insbesondere Eisen- und Gusseisenschmelzen, mit einer Probenkammer, die eine Einlauföffnung aufweist, wobei in der Probenkammer Tellur angeordnet ist, **dadurch gekennzeichnet, dass**
a) die Probenkammer 0,01 bis 0,05 g/cm³ Tellur, bezogen auf das Volumen der Probenkammer, enthält und dass das Tellur pulverförmig ausgebildet ist mit einer durchschnittlichen Teilchengröße von höchstens 150 µm
oder
b) das Tellur pulverförmig ausgebildet ist mit einer durchschnittlichen Teilchengröße von höchstens 150 µm und einer spezifischen Oberfläche von 0,03 bis 0,1 m²/g.

2. Vorrichtung nach Anspruch 1, **dadurch gekennzeichnet, dass** die Probenkammer 0,015 bis 0,025 glcm³ Tellur enthält.

3. Vorrichtung nach Anspruch 1, **dadurch gekennzeichnet, dass** die spezifische Oberfläche 0,06 bis 0,07 m²/g beträgt.

## Claims

1. Device for sampling melted mass made of metal, in particular melted mass made of iron and cast iron, having a sample chamber comprising an inlet opening, whereby tellurium is arranged in said sample chamber, **characterised in that**
a) the sample chamber contains 0.01 to 0.05 g/cm³ tellurium, relative to the volume of the sample chamber, and **in that** the tellurium is provided in powder form and having an average particle size of no more than 150 µm
or
b) the tellurium is provided in powder form and having an average particle size of no more than 150 µm and a specific surface of 0.03 to 0.1 m²/g.

2. Device according to claim 1, **characterised in that** the sample chamber contains 0.015 to 0.025 g/cm³ tellurium.

3. Device according to claim 1, **characterised in that** the specific surface is 0.06 to 0.07 m²/g.

## Revendications

1. Dispositif de prélèvement d'échantillons de masses fondues métalliques, notamment de masses fondues de fer et de fonte de fer, avec une chambre d'échantillons qui présente une ouverture d'entrée, dans lequel du tellure est disposé dans la chambre d'échantillons, **caractérisé en ce que**
a) la chambre d'échantillons contient 0,01 à 0,05 g/cm³ de tellure par rapport au volume de la chambre d'échantillons et que le tellure est réalisé sous forme pulvérulente avec une taille de particules moyenne de 150 µm maximum
ou
b) le tellure est réalisé sous forme pulvérulente avec une taille de particules moyenne de 150 µm maximum et une surface spécifique de 0,03 à 0,1 m²/g.

2. Dispositif selon la revendication 1, **caractérisé en ce que** la chambre d'échantillons contient 0,015 à 0,025 g/cm³ de tellure.

3. Dispositif selon la revendication 1, **caractérisé en ce que** la surface spécifique se monte à 0,06 à 0,07 m²/g.
